(19)

Europäisches
Patentamt

European
Patent Office

Office européen
des brevets

(11) **EP 4 626 095 A2**

(12) **EUROPEAN PATENT APPLICATION**

(43) Date of publication:
**01.10.2025 Bulletin 2025/40**

(21) Application number: **25192257.1**

(22) Date of filing: **05.03.2021**

(51) International Patent Classification (IPC):
**H04W 56/00** (2009.01)

(52) Cooperative Patent Classification (CPC):
**H04W 56/0045; H04W 36/0072;** H04W 36/00725

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2020 EP 20169971**

(62) Document number(s) of the earlier application(s) in
accordance with Art. 76 EPC:
**21709032.3 / 4 128 908**

(71) Applicants:
• **Sony Group Corporation
Tokyo 108-0075 (JP)**
• **Sony Europe B.V.
Weybridge, Surrey KT13 0XW (GB)**
Designated Contracting States:
**AL**

(72) Inventors:
• **AWAD, Yassin Aden
Basingstoke, RG22 4SB (GB)**
• **SHARMA, Vivek
Basingstoke, RG22 4SB (GB)**
• **WEI, Yuxin
Basingstoke, RG22 4SB (GB)**
• **WAKABAYASHI, Hideji
Basingstoke, RG22 4SB (GB)**

(74) Representative: **D Young & Co LLP
3 Noble Street
London EC2V 7BQ (GB)**

Remarks:
This application was filed on 28-07-2025 as a
divisional application to the application mentioned
under INID code 62.

(54) **COMMUNICATIONS DEVICES, INFRASTRUCTURE EQUIPMENT AND METHODS**

(57) A communications device is provided. The communications device comprises transceiver circuitry configured to transmit signals to and/or to receive signals from a first cell of a wireless communications network, and controller circuitry. The controller circuitry is configured in combination with the transceiver circuitry to determine that the communications device is to perform a handover procedure from the first cell to a second cell of the wireless communications network, to measure a difference between the start of a first radio frame received from the first cell and the start of a second radio frame received from the second cell, and to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell.

FIG. 10

EP 4 626 095 A2

## Description

## BACKGROUND

### Field of Disclosure

The present disclosure relates to communications devices which are configured to transmit data to and receive data from wireless communications networks and to infrastructure equipment forming part of wireless communications networks.

The present application claims the Paris Convention priority from European patent application number EP20169971.7, the contents of which are hereby incorporated by reference.

### Description of Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Third and fourth generation mobile telecommunication systems, such as those based on the 3GPP defined UMTS and Long Term Evolution (LTE) architecture, are able to support more sophisticated services than simple voice and messaging services offered by previous generations of mobile telecommunication systems. For example, with the improved radio interface and enhanced data rates provided by LTE systems, a user is able to enjoy high data rate applications such as mobile video streaming and mobile video conferencing that would previously only have been available via a fixed line data connection. The demand to deploy such networks is therefore strong and the coverage area of these networks, i.e. geographic locations where access to the networks is possible, may be expected to increase ever more rapidly.

Future wireless communications networks will be expected to routinely and efficiently support communications with a wider range of devices associated with a wider range of data traffic profiles and types than current systems are optimised to support. For example, it is expected future wireless communications networks will be expected to efficiently support communications with devices including reduced complexity devices, machine type communication (MTC) devices, high resolution video displays, virtual reality headsets and so on. Some of these different types of devices may be deployed in very large numbers, for example low complexity devices for supporting the "The Internet of Things", and may typically be associated with the transmissions of relatively small amounts of data with relatively high latency tolerance.

In view of this there is expected to be a desire for future wireless communications networks, for example those which may be referred to as 5G or new radio (NR) system / new radio access technology (RAT) systems, as well as future iterations / releases of existing systems, to efficiently support connectivity for a wide range of devices associated with different applications and different characteristic data traffic profiles.

The increasing use of different types of network infrastructure equipment and terminal devices associated with different traffic profiles give rise to new challenges for efficiently handling communications in wireless communications systems that need to be addressed.

## SUMMARY OF THE DISCLOSURE

The present disclosure can help address or mitigate at least some of the issues discussed above.

A first embodiment of the present technique can provide a communications device. The communications device comprises transceiver circuitry configured to transmit signals to and/or to receive signals from a first cell of a wireless communications network, and controller circuitry. The controller circuitry is configured in combination with the transceiver circuitry to determine that the communications device is to perform a handover procedure from the first cell to a second cell of the wireless communications network, to measure a difference between the start of a first radio frame received from the first cell and the start of a second radio frame received from the second cell, and to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell.

A second embodiment of the present technique can provide a communications device. The communications device comprises transceiver circuitry configured to transmit signals to and/or to receive signals from a first cell of a wireless communications network, and controller circuitry. The controller circuitry is configured in combination with the transceiver circuitry to determine that the communications device is to perform a handover procedure from the first cell to a second cell of the wireless communications network, to transmit, in communications resources pre-allocated to the communications device and in which the communications device may transmit signals, uplink reference signals to the second cell, and to receive, from the first cell in one or more messages of the handover procedure, in response to the transmitted uplink reference signals, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell.

Embodiments of the present technique, which in addition to communications devices also relate to infrastructure equipment, methods of operating communications devices and infrastructure equipment, and circuitry for communications devices and infrastructure equipment, provide solutions that allow for a Random Access (RACH)-less handover procedure to be performed regardless of the significance of propagation delays.

Respective aspects and features of the present disclosure are defined in the appended claims.

It is to be understood that both the foregoing general description and the following detailed description are exemplary, but are not restrictive, of the present technology. The described embodiments, together with further advantages, will be best understood by reference to the following detailed description taken in conjunction with the accompanying drawings.

**BRIEF DESCRIPTION OF THE DRAWINGS**

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and wherein:

Figure 1 schematically represents some aspects of an LTE-type wireless telecommunication system which may be configured to operate in accordance with certain embodiments of the present disclosure;

Figure 2 schematically represents some aspects of a new radio access technology (RAT) wireless communications system which may be configured to operate in accordance with certain embodiments of the present disclosure;

Figure 3 is a schematic block diagram of some components of the wireless communications system shown in Figure 2 in more detail in order to illustrate example embodiments of the present technique;

Figure 4 is a schematic representation illustrating steps in a four-step random access (RACH) procedure in a wireless telecommunications network;

Figure 5 is a schematic representation illustrating an example of uplink data transmission of a communications device in RRC_INACTIVE mode with a downlink response from the network;

Figure 6 is a schematic representation illustrating an example four-step RACH procedure which could be applied for transmissions of small amounts of data;

Figure 7 is a schematic representation illustrating an example two-step RACH procedure which could be applied for transmissions of small amounts of data;

Figure 8 is a schematic representation illustrating steps in a two-step RACH procedure in a wireless telecommunications network;

Figure 9 is a signalling ladder diagram schematically representing aspects of a known handover procedure;

Figure 10 is a part schematic representation, part message flow diagram of communications between a communications device and a wireless communications network in accordance with embodiments of the present technique;

Figure 11 illustrates a propagation delay difference between the serving and target cells at a user equipment (UE) in accordance with embodiments of the present technique; and

Figure 12 shows a flow diagram illustrating a method of operating a communications device in accordance with embodiments of the present technique.

**DETAILED DESCRIPTION OF THE EMBODIMENTS**

**Long Term Evolution Advanced Radio Access Technology (4G)**

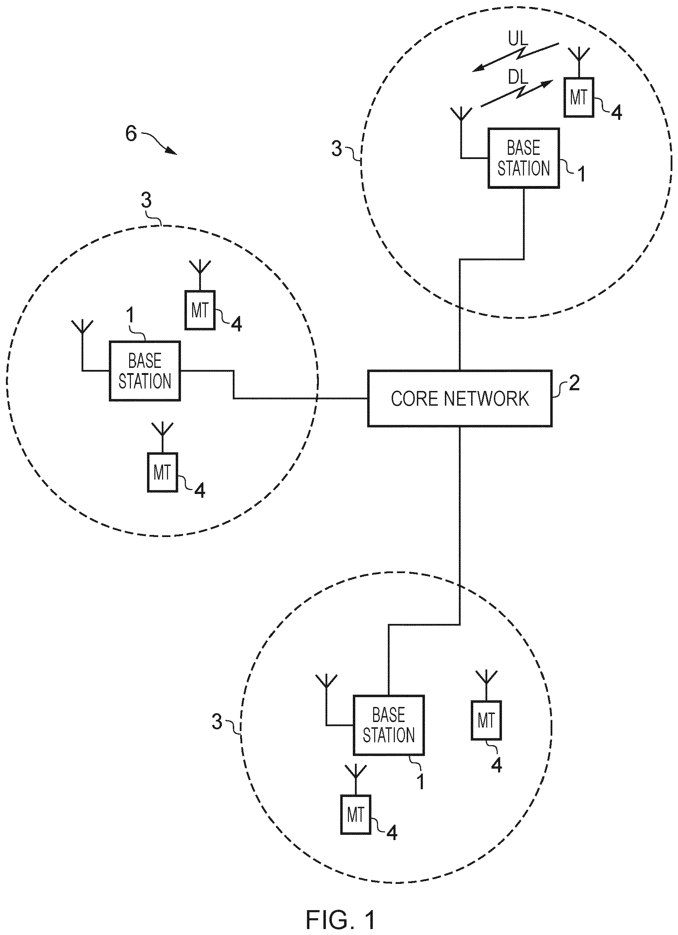

Figure 1 provides a schematic diagram illustrating some basic functionality of a mobile telecommunications network / system 6 operating generally in accordance with LTE principles, but which may also support other radio access technologies, and which may be adapted to implement embodiments of the disclosure as described herein. Various elements of Figure 1 and certain aspects of their respective modes of operation are well-known and defined in the relevant standards administered by the 3GPP (RTM) body, and also described in many books on the subject, for example, Holma H.

and Toskala A [1]. It will be appreciated that operational aspects of the telecommunications networks discussed herein which are not specifically described (for example in relation to specific communication protocols and physical channels for communicating between different elements) may be implemented in accordance with any known techniques, for example according to the relevant standards and known proposed modifications and additions to the relevant standards.

The network 6 includes a plurality of base stations 1 connected to a core network 2. Each base station provides a coverage area 3 (i.e. a cell) within which data can be communicated to and from communications devices 4.

Although each base station 1 is shown in Figure 1 as a single entity, the skilled person will appreciate that some of the functions of the base station may be carried out by disparate, inter-connected elements, such as antennas (or antennae), remote radio heads, amplifiers, etc. Collectively, one or more base stations may form a radio access network.

Data is transmitted from base stations 1 to communications devices 4 within their respective coverage areas 3 via a radio downlink. Data is transmitted from communications devices 4 to the base stations 1 via a radio uplink. The core network 2 routes data to and from the communications devices 4 via the respective base stations 1 and provides functions such as authentication, mobility management, charging and so on. Terminal devices may also be referred to as mobile stations, user equipment (UE), user terminal, mobile radio, communications device, and so forth.

Services provided by the core network 2 may include connectivity to the internet or to external telephony services. The core network 2 may further track the location of the communications devices 4 so that it can efficiently contact (i.e. page) the communications devices 4 for transmitting downlink data towards the communications devices 4.

Base stations, which are an example of network infrastructure equipment, may also be referred to as transceiver stations, nodeBs, e-nodeBs, eNB, g-nodeBs, gNB and so forth. In this regard different terminology is often associated with different generations of wireless telecommunications systems for elements providing broadly comparable functionality. However, certain embodiments of the disclosure may be equally implemented in different generations of wireless telecommunications systems, and for simplicity certain terminology may be used regardless of the underlying network architecture. That is to say, the use of a specific term in relation to certain example implementations is not intended to indicate these implementations are limited to a certain generation of network that may be most associated with that particular terminology.

### New Radio Access Technology (5G) Wireless Communications System

3GPP has completed the basic version of 5G in Rel-15, known as the New Radio Access Technology (NR). In addition, enhancements have been made in Rel-16, incorporating new features such as the 2-step RACH procedure [2], Industrial Internet of Things (IIoT) [3] and NR-based Access to Unlicensed Spectrum (NR-U) [4].

Further enhancements have been agreed for Rel-17, such as small data transmissions while the UE is in the RRC_INACTIVE state. With reference to [5], some specific examples of small data transmission and infrequent data traffic may include the following use cases:

- Smartphone applications:

  ◦ Traffic from Instant Messaging services;
  ◦ Heart-beat/keep-alive traffic from IM/email clients and other applications; and
  ◦ Push notifications from various applications;

- Non-smartphone applications:

  ◦ Traffic from wearable devices (e.g. periodic positioning information);
  ◦ Sensors (e.g., Industrial Wireless Sensor Networks transmitting temperature or pressure readings, periodically or in an event-triggered manner); and
  ◦ Smart meters and smart meter networks sending periodic meter readings.

In addition, based on [5] as mentioned above, uplink small data transmissions have been enabled for UEs in the RRC_INACTIVE state, for RACH based schemes (i.e. 2-step and 4-step RACH, which are discussed in greater detail below). This includes general procedures to enable user plane data transmissions for small data packets in the inactive state (using either MsgA of the 2-step RACH procedure or Msg3 of the 4-step RACH procedure), and enables flexible payload sizes larger than the Rel-16 Common Control Channel (CCCH) message size that is possible currently for a UE in the RRC_INACTIVE state to transmit small data in MsgA or Msg3 to support user plane data transmission in the uplink.

The NR radio access system employs Orthogonal Frequency Division Multiple Access (OFDMA), where different users are scheduled in different subsets of sub-carriers simultaneously. However, OFDMA requires tight synchronisation in the uplink transmissions in order to achieve orthogonality of transmissions from different users. In essence, the uplink transmissions from all users must arrive at the same time (i.e. they must be synchronised) at the gNB receiver. A UE that is far from the gNB must therefore transmit earlier than a UE closer to the gNB, due to different RF propagation delays. In NR, timing advance commands are applied to control the uplink transmission timing for individual UEs, mainly for Physical Uplink Shared Channels (PUSCHs), Physical Uplink Control Channels (PUCCHs) and Sounding Reference Signals (SRS). The timing advance usually comprises twice the one-way propagation delay between the UE and gNB, thus representing both downlink and uplink delays.

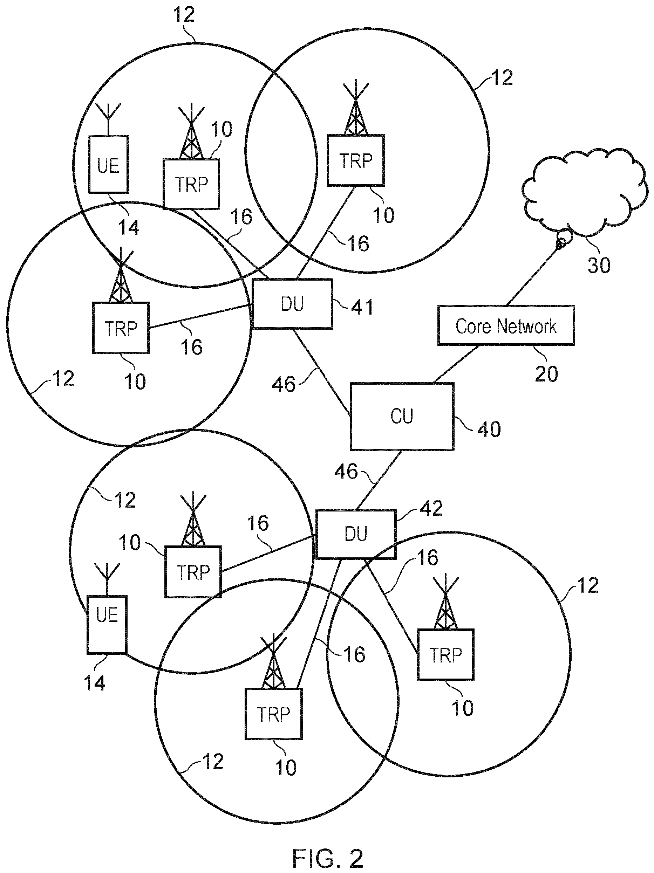

An example configuration of a wireless communications network which uses some of the terminology proposed for and used in NR and 5G is shown in Figure 2. In Figure 2 a plurality of transmission and reception points (TRPs) 10 are connected to distributed control units (DUs) 41, 42 by a connection interface represented as a line 16. Each of the TRPs 10 is arranged to transmit and receive signals via a wireless access interface within a radio frequency bandwidth available to the wireless communications network. Thus, within a range for performing radio communications via the wireless access interface, each of the TRPs 10, forms a cell of the wireless communications network as represented by a circle 12. As such, wireless communications devices 14 which are within a radio communications range provided by the cells 12 can transmit and receive signals to and from the TRPs 10 via the wireless access interface. Each of the distributed units 41, 42 are connected to a central unit (CU) 40 (which may be referred to as a controlling node) via an interface 46. The central unit 40 is then connected to the core network 20 which may contain all other functions required to transmit data for communicating to and from the wireless communications devices and the core network 20 may be connected to other networks 30.

The elements of the wireless access network shown in Figure 2 may operate in a similar way to corresponding elements of an LTE network as described with regard to the example of Figure 1. It will be appreciated that operational aspects of the telecommunications network represented in Figure 2, and of other networks discussed herein in accordance with embodiments of the disclosure, which are not specifically described (for example in relation to specific communication protocols and physical channels for communicating between different elements) may be implemented in accordance with any known techniques, for example according to currently used approaches for implementing such operational aspects of wireless telecommunications systems, e.g. in accordance with the relevant standards.

The TRPs 10 of Figure 2 may in part have a corresponding functionality to a base station or eNodeB of an LTE network. Similarly, the communications devices 14 may have a functionality corresponding to the UE devices 4 known for operation with an LTE network. It will be appreciated therefore that operational aspects of a new RAT network (for example in relation to specific communication protocols and physical channels for communicating between different elements) may be different to those known from LTE or other known mobile telecommunications standards. However, it will also be appreciated that each of the core network component, base stations and communications devices of a new RAT network will be functionally similar to, respectively, the core network component, base stations and communications devices of an LTE wireless communications network.

In terms of broad top-level functionality, the core network 20 connected to the new RAT telecommunications system represented in Figure 2 may be broadly considered to correspond with the core network 2 represented in Figure 1, and the respective central units 40 and their associated distributed units / TRPs 10 may be broadly considered to provide functionality corresponding to the base stations 1 of Figure 1. The term network infrastructure equipment / access node may be used to encompass these elements and more conventional base station type elements of wireless telecommunications systems. Depending on the application at hand the responsibility for scheduling transmissions which are scheduled on the radio interface between the respective distributed units and the communications devices may lie with the controlling node / central unit and / or the distributed units / TRPs. A communications device 14 is represented in Figure 2 within the coverage area of the first communication cell 12. This communications device 14 may thus exchange signalling with the first central unit 40 in the first communication cell 212 via one of the distributed units 10 associated with the first communication cell 12.

It will further be appreciated that Figure 2 represents merely one example of a proposed architecture for a new RAT based telecommunications system in which approaches in accordance with the principles described herein may be adopted, and the functionality disclosed herein may also be applied in respect of wireless telecommunications systems having different architectures.

Thus certain embodiments of the disclosure as discussed herein may be implemented in wireless telecommunication systems / networks according to various different architectures, such as the example architectures shown in Figures 1 and 2. It will thus be appreciated the specific wireless telecommunications architecture in any given implementation is not of primary significance to the principles described herein. In this regard, certain embodiments of the disclosure may be described generally in the context of communications between network infrastructure equipment / access nodes and a communications device, wherein the specific nature of the network infrastructure equipment / access node and the communications device will depend on the network infrastructure for the implementation at hand. For example, in some scenarios the network infrastructure equipment / access node may comprise a base station, such as an LTE-type base station 1 as shown in Figure 1 which is adapted to provide functionality in accordance with the principles described herein, and in other examples the network infrastructure equipment may comprise a control unit / controlling node 40 and / or a TRP 10 of the kind shown in Figure 2 which is adapted to provide functionality in accordance with the principles described herein.

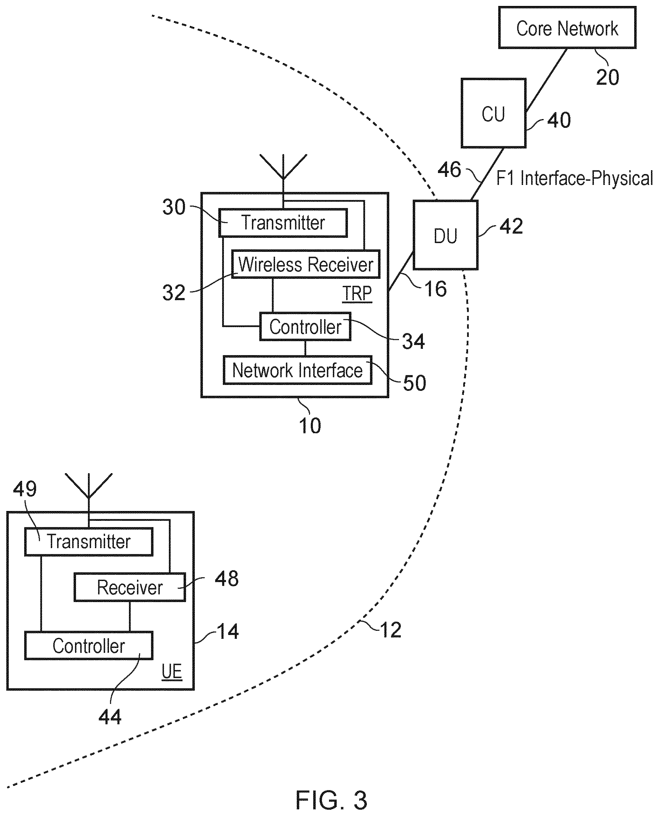

A more detailed diagram of some of the components of the network shown in Figure 2 is provided by Figure 3. In Figure 3, a TRP 10 as shown in Figure 2 comprises, as a simplified representation, a wireless transmitter 30, a wireless receiver 32 and a controller or controlling processor 34 which may operate to control the transmitter 30 and the wireless receiver 32 to transmit and receive radio signals to one or more UEs 14 within a cell 12 formed by the TRP 10. As shown in Figure 3, an example UE 14 is shown to include a corresponding transmitter 49, a receiver 48 and a controller 44 which is configured to control the transmitter 49 and the receiver 48 to transmit signals representing uplink data to the wireless communications network via the wireless access interface formed by the TRP 10 and to receive downlink data as signals transmitted by the transmitter 30 and received by the receiver 48 in accordance with the conventional operation.

The transmitters 30, 49 and the receivers 32, 48 (as well as other transmitters, receivers and transceivers described in relation to examples and embodiments of the present disclosure) may include radio frequency filters and amplifiers as well as signal processing components and devices in order to transmit and receive radio signals in accordance for example with the 5G/NR standard. The controllers 34, 44, 48 (as well as other controllers described in relation to examples and embodiments of the present disclosure) may be, for example, a microprocessor, a CPU, or a dedicated chipset, etc., configured to carry out instructions which are stored on a computer readable medium, such as a non-volatile memory. The processing steps described herein may be carried out by, for example, a microprocessor in conjunction with a random access memory, operating according to instructions stored on a computer readable medium.

As shown in Figure 3, the TRP 10 also includes a network interface 50 which connects to the DU 42 via a physical interface 16. The network interface 50 therefore provides a communication link for data and signalling traffic from the TRP 10 via the DU 42 and the CU 40 to the core network 20.

The interface 46 between the DU 42 and the CU 40 is known as the F1 interface which can be a physical or a logical interface. The F1 interface 46 between CU and DU may operate in accordance with specifications 3GPP TS 38.470 and 3GPP TS 38.473, and may be formed from a fibre optic or other wired high bandwidth connection. In one example the connection 16 from the TRP 10 to the DU 42 is via fibre optic. The connection between a TRP 10 and the core network 20 can be generally referred to as a backhaul, which comprises the interface 16 from the network interface 50 of the TRP10 to the DU 42 and the F1 interface 46 from the DU 42 to the CU 40.

**RACH Procedures in LTE and NR**

In wireless telecommunications networks, such as LTE and NR type networks, there are different Radio Resource Control (RRC) modes for terminal devices. For example, it is common to support an RRC idle mode (RRC_IDLE) and an RRC connected mode (RRC_CONNECTED). A terminal device in the idle mode may transition to connected mode, for example because it needs to transmit uplink data or respond to a paging request, by undertaking a random access procedure. The random access procedure involves the terminal device transmitting a preamble on a physical random access channel and so the procedure is commonly referred to as a RACH or PRACH procedure / process.

In addition to a terminal device deciding itself to initiate a random access procedure to connect to the network, it is also possible for the network, e.g. a base station, to instruct a terminal device in connected mode to initiate a random access procedure by transmitting to the terminal device an instruction to do so. Such an instruction is sometimes referred to as a PDCCH order (Physical Downlink Control Channel order); see, for example, Section 5.3.3.1.3 in ETSI TS 36.213 V13.0.0 (2016-01) / 3GPP TS 36.212 version 13.0.0 Release 13 [6].

There are various scenarios in which a network triggered RACH procedure (PDCCH order) may arise. For example:

- a terminal device may receive a PDCCH order to transmit on PRACH as part of a handover procedure;
- a terminal device that is RRC connected to a base station but has not exchanged data with the base station for a relatively long time may receive a PDCCH order to cause the terminal device to transmit a PRACH preamble so that it can be re-synchronised to the network and allow the base station to correct timings for the terminal device;
- a terminal device may receive a PDCCH order so that it can establish a different RRC configuration in the subsequent RACH procedure, this may apply, for example, for a narrowband IoT terminal device which is prevented from RRC reconfiguration in connected mode whereby sending the terminal device to idle mode through a PDCCH order allows the terminal device to be configured in the subsequent PRACH procedure, for example to configure the terminal device for a different coverage enhancement level (e.g. more or fewer repetitions).

For convenience, the term PDCCH order is used herein to refer to signalling transmitted by a base station to instruct a terminal device to initiate a PRACH procedure regardless of the cause. However, it will be appreciated such an instruction may in some cases be transmitted on other channels / in higher layers. For example, in respect of an intra-system handover procedure, what is referred to here as a PDCCH order may be an RRC Connection Reconfiguration instruction transmitted on a downlink shared channel / PDSCH.

When a PDCCH order is transmitted to a terminal device, the terminal device is assigned a PRACH preamble signature sequence to use for the subsequent PRACH procedure. This is different from a terminal device triggered PRACH procedure in which the terminal device selects a preamble from a predefined set and so could by coincidence select the same preamble as another terminal device performing a PRACH procedure at the same time, giving rise to potential contention. Consequently, for PRACH procedures initiated by a PDCCH order there is no contention with other terminal devices undertaking PRACH procedures at the same time because the PRACH preamble for the PDCCH ordered terminal device is scheduled by the network / base station.

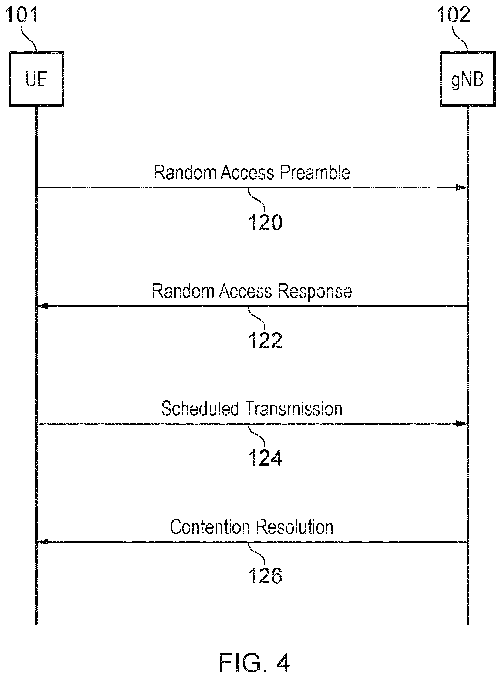

Figure 4 shows a typical RACH procedure used in LTE systems such as that described by reference to Figure 1 which could also be applied to an NR wireless communications system such as that described by reference to Figure 2. A UE 101, which could be in an inactive or idle mode, may have some data which it needs to send to the network. To do so, it sends a random access preamble 120 to a gNodeB 102. This random access preamble 120 indicates the identity of the UE 101 to the gNodeB 102, such that the gNodeB 102 can address the UE 101 during later stages of the RACH procedure. Assuming the random access preamble 120 is successfully received by the gNodeB 102 (and if not, the UE 101 will simply retransmit it with a higher power), the gNodeB 102 will transmit a random access response 122 message to the UE 101 based on the identity indicated in the received random access preamble 120. The random access response 122 message carries a further identity which is assigned by the gNodeB 102 to identify the UE 101, as well as a timing advance value (such that the UE 101 can change its timing to compensate for the round trip delay caused by its distance from the gNodeB 102) and grant uplink resources for the UE 101 to transmit the data in. Following the reception of the random access response message 122, the UE 101 transmits the scheduled transmission of data 124 to the gNodeB 102, using the identity assigned to it in the random access response message 122. Assuming there are no collisions with other UEs, which may occur if another UE and the UE 101 send the same random access preamble 120 to the gNodeB 102 at the same time and using the same frequency resources, the scheduled transmission of data 124 is successfully received by the gNodeB 102. The gNodeB 102 will respond to the scheduled transmission 124 with a contention resolution message 126.

How UE states (e.g. RRC_IDLE, RRC_CONNECTED etc.) may translate to NR systems has been recently discussed. For example, it has been agreed that a new *"inactive"* state should be introduced, where the UE should be able to start data transfer with a low delay (as necessitated by RAN requirements). The possibility of the UE being able to transmit data in the *inactive* state without transition to connected state has also been agreed. Two approaches have been identified as follows, in addition to a baseline move to the *connected* state before the transmission of data:

- • Data could be transmitted together with an initial RRC message requesting a transition to the *connected* state, or
- • Data could be transmitted in a new state.

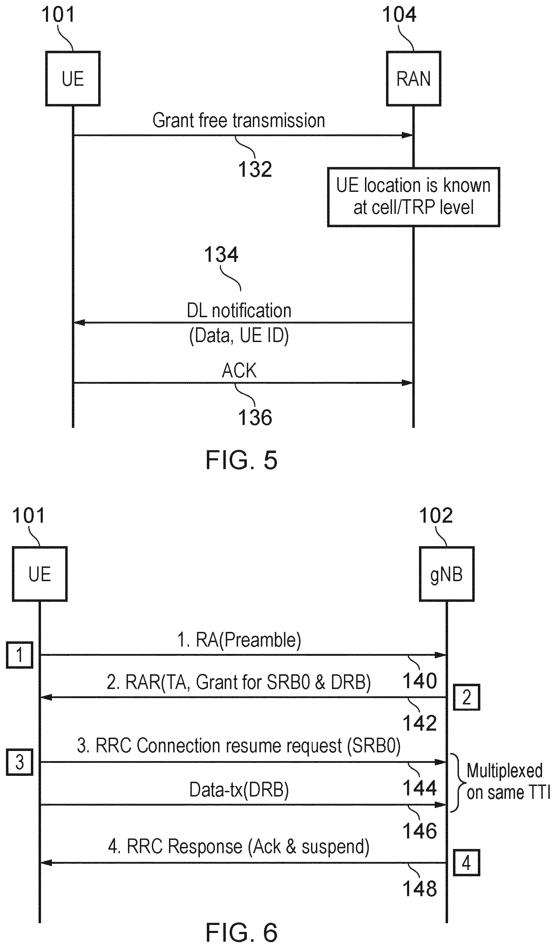

Discussions relating to uplink data transmission in the *inactive* state have sought solutions for sending uplink data without RRC signalling in the *inactive* state and without the UE initiating a transition to the *connected* state. A first potential solution is discussed in [7]. This solution is shown in Figure 5, which is reproduced along with the accompanying text from [7]. As shown in Figure 5, an uplink data transmission 132 can be made to a network 104 in the RRC_INACTIVE state by a UE 101. The network 104 here at least knows in which cell the transmission 132 was received, and potentially may even know via which TRP. For a certain amount of time after receiving an uplink data packet, the network 104 could assume that the UE 101 is still in the same location, so that any RLC acknowledgement or application response could be scheduled for transmission to the UE 101 in the same area where the UE 101 is, for example in the next paging response 134. Alternatively, the UE 101 may be paged in a wider area. Following reception of this downlink response 134 the UE 101 may transmit an acknowledgement 136 to the network 104 to indicate that it was successfully received.

A second potential solution is discussed in [8]. This solution is shown in Figure 6, which is reproduced along with the accompanying text from [8]. The mechanism described in Figure 6 is for small data transmissions and is based on the Suspend-Resume mechanism for LTE. The main difference is that User Plane data is transmitted simultaneously with message 3 (the RRC Connection resume request 144 in Figure 6) and an optional RRC suspend signalled in message 4. As shown in Figure 6, initially under the assumption of a random access scheme as in LTE, when a UE 101 receives uplink data to transmit to a gNodeB 102 of a mobile communications network, the UE 101 first transmits a random access (RA) preamble 140. Here a special set of preambles (a preamble partition) can be used as in LTE to indicate a small data transmission (meaning that the UE 101 wants a larger grant and possibly that the UE 101 wishes to remain in the *inactive* state).

The network (via the gNodeB 102) responds with a random access response (RAR) message 142 containing timing advance and a grant. The grant for message 3 should be large enough to fit both the RRC request and a small amount of data. The allowable size of the data could be specified and linked to the preambles, e.g. preamble X asks for a grant to allow Y bytes of data. Depending on available resources, the gNodeB 102 may supply a grant for message 3 accommodating only the resume request, in which case an additional grant could be supplied after reception of message 3.

At this point the UE 101 will prepare the RRC Connection Resume Request 144 and perform the following actions:

- Re-establish Packet Data Convergence Protocol (PDCP) for SRBs and all DRBs that are established;
- Re-establish RLC for signalling radio bearers (SRBs) and all data radio bearers (DRBs) that are established. The PDCP should reset sequence numbers (SN) and hyper frame numbers (HFN) during this step;
- Resume SRBs and all DRBs that are suspended;
- Derive a new security key (e.g. eNB key, or KeNB) possible based on next-hop chaining counters (NCC) provided before the UE 101 was sent to the *"inactive"* state;
- Generate encryption and integrity protection keys and configure PDCP layers with previously configured security algorithm;
- Generate RRC Connection Resume Request message 144;
- An indication, e.g. a buffer status report (BSR), of potentially remaining data is added;
- An indication that the UE 101 wishes to remain in the *inactive* state (if this is not indicated by the preamble) is added;
- Apply the default physical channel and media access control (MAC) configuration; and
- Submit RRC Connection Resume Request 144 and data 146 to lower layers for transmission.

After these steps, the lower layers transmit Message 3. This can also contain User Plane data 146 multiplexed by MAC, like existing LTE specifications as security context is already activated to encrypt the User Plane. The signalling (using SRB) and data (using DRB will be multiplexed by MAC layer (meaning the data is not sent on the SRB).

The network (via the gNodeB 102) receives Message 3 and uses the context identifier to retrieve the UE's 101 RRC context and re-establish the PDCP and RLC for the SRBs and DRBs. The RRC context contains the encryption key and the User Plane data is decrypted (will be mapped to the DRB that is reestablished or to an always available contention based channel).

Upon successful reception of Message 3 and User Plane data, the network (via the gNodeB 102) responds with a new RRC response message 148 which could either be an "RRC suspend" or an "RRC resume" or an "RRC reject". This transmission resolves contention and acts as an acknowledgement of Message 3. In addition to RRC signalling the network can in the same transmission acknowledge any user data (RLC acknowledgements). Multiplexing of RRC signalling and User Plane acknowledgements will be handled by the MAC layer. If the UE 101 loses the contention then a new attempt is needed.

- In case the network decides to resume the UE 101, the message will be similar to a RRC resume and may include additional RRC parameters.
- In case the network decides to immediately suspend the UE 101, the message will be similar to a RRC suspend. This message can possibly be delayed to allow downlink acknowledgements to be transmitted.
- In case the network sends a resume reject the UE 101 will initiate a new scheduling request (SR) as in LTE, after some potential backoff time.

This procedure will, strictly speaking, transmit the User Plane data without the UE 101 fully entering RRC_CONNECTED, which formerly would happen when the UE 101 receives the RRC Response (Message 4) indicating resume. On the other hand, it uses the RRC context to enable encryption etc. even if the network's decision is to make the UE 101 remain in RRC_INACTIVE by immediately suspending the UE 101 again.

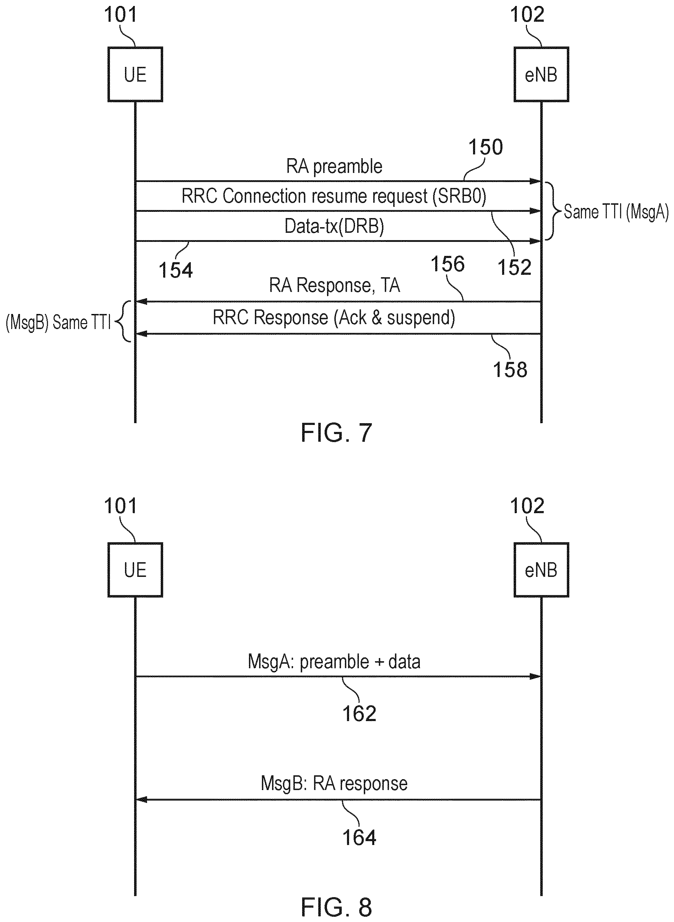

Figures 7 and 8 each show examples of a simplified two-step RACH procedure, in which small amounts of data can be transmitted by a UE 101 to a gNodeB or eNodeB 102. In the two-step RACH procedure, the data is transmitted at the same time as the RACH preamble (message 162 in Figure 8), and so there is no need for the UE 101 to wait for a response from the network providing it with an uplink grant to transmit its data. However, the downside is that a limited amount of data can be transmitted in message 1. Following the reception of message 1 at the eNodeB 102, the eNodeB 101 transmits a random access response (message 162 in Figure 8) to the UE 101, which comprises an acknowledgement of the received data in message 1. Figure 7 shows the messages in a little more detail, where in message 1 (also termed herein *msgA),* the random access preamble 150, RRC connection resume request 152 and/or the small amount of data 154 are transmitted during the same transmission time interval (TTI). This message *msgA* is essentially a combination of Message 1 and Message 3 in the 4-step RACH procedure as shown for example in Figure 6. Likewise, for message 2 (also termed herein *msgB),* the random access response with timing advance 156 and the RRC response 158 (comprising an acknowledgement and RRC suspend command) are transmitted by the eNodeB 102 to the UE 101 during the same TTI. This message *msgB* is essentially a combination of Message 2 and Message 4 in the 4-step RACH procedure as shown for example in Figure 6. Further details relating to the two-step and four-step RACH procedures can be found in the 3GPP Technical Report 38.889 [9].

**Handover Procedure in LTE**

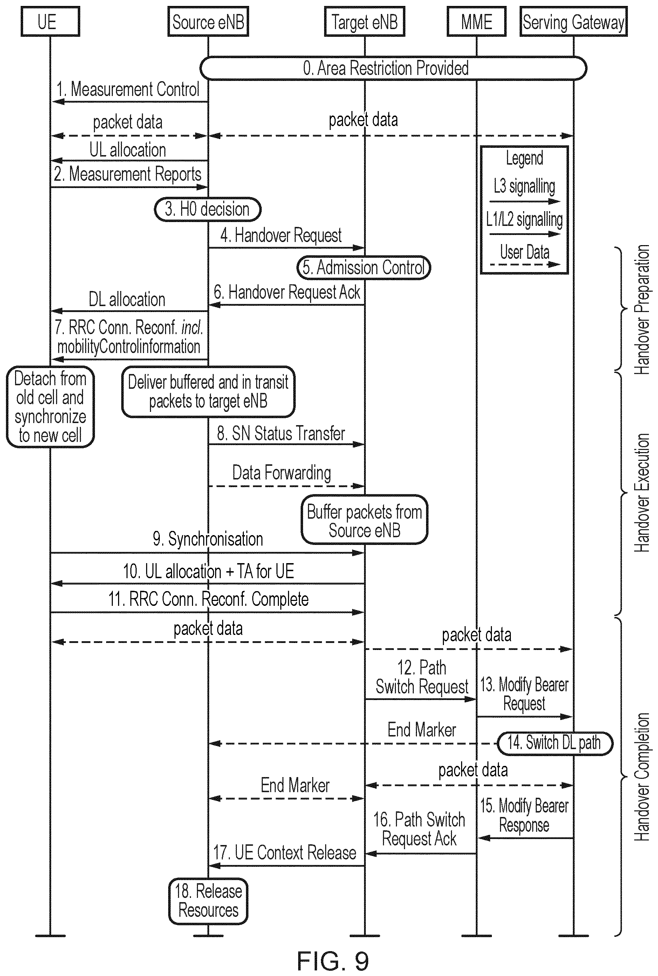

Figure 9 is a ladder diagram showing signalling exchange between an RRC connected mode terminal device ("UE"), a source network access node ("Source eNB"), a target network access node ("target eNB"), a mobility management entity ("MME") and a serving gateway ("Serving Gateway") for a conventional Intra-MME/Serving gateway LTE handover procedure in a conventional LTE-based wireless telecommunications network. This procedure is well established and well understood by those skilled in the art, and is described in the relevant standards, and so is not described in detail herein in the interest of brevity. Although the procedure shown in Figure 9 is described with respect to LTE, those skilled in the art would understand that a basic handover procedure for NR would be very similar to that shown in Figure 9, with the major difference being the entities involved.

In known LTE-based wireless telecommunication systems such as that described above with reference to Figure 1, a terminal device in RRC CONNECTED mode / state is generally configured with event-based report triggering criteria. Thus the terminal device is configured by the network access node to which it is currently connected (the source network access node) to make measurements of radio channel conditions associated with radio paths between the terminal device and the source network access node and neighbouring access nodes (potential target network access nodes for handover). This configuration process is schematically represented in Figure 9 by the step labelled "1. Measurement Control". In LTE, radio channel condition measurements are based on Cell-specific Reference Signals (CRSs) transmitted by network access nodes. The CRS transmissions from a given network access node provide an indication of the identity of the network access node (based on a mapping between the resources used for CRS transmissions and a physical cell identity (PCI) for the network access node). Terminal devices are configured to measure a characteristic of the CRS received from different network access nodes, for example a reference signals received power (RSRP) or a reference signal received quality (RSRQ) to establish a characteristic indication of channel quality for the different network access nodes. It is based on these measurements of channel quality that handover decisions are made.

In broad summary, the terminal device is configured to determine, on an ongoing basis, if the radio channel conditions associated with any neighbouring network access node (i.e. a network access node to which the terminal device is not currently connected) meet a predefined criterion for triggering a measurement report. If the criterion is met in respect of a given neighbouring network access node, the terminal device informs the network access node to which it is connected (source network access node) that a handover may be appropriate by sending a measurement report that indicates the predefined criterion has been met for the relevant network access node. The step of transmitting a measurement report is schematically represented in Figure 9 by the step labelled "2. Measurement Report". Based on the measurement report, the source network access node makes a decision on whether or not to handover the terminal device to the relevant neighbouring network access node (schematically indicated in Figure 9 by the step labelled "3. HO decision"). If the source network access node does determine the terminal device should be handed over, processing continues as set out in Figure 9.

**Timing Advance Adjustment during Initial Access**

During initial access where a UE is in transition from RRC_IDLE/ RRC_INACTIVE to RRC_CONNECTED, the UE follows initial access procedures either employing 4-step or 2-step RACH as described above with reference to Figures 4 to 8. During initial access, the UE may perform a timing advance (TA) adjustment.

As described above, for a 4-step RACH procedure, the gNB estimates the propagation delay from the random-access preamble transmitted by the UE in message 1, and converts this propagation delay to a TA value command which is included in the RAR transmitted to the UE in message 2. Future uplink transmissions by the UE (including that of message 3) will be adjusted based on the TA value command. Similarly, for a 2-step RACH procedure, the gNB will receive a random access preamble and data in a PUSCH from the UE in *msgA,* and will estimate the propagation delay from the received random access preamble before converting this to a TA value command. Then, in *msgB,* the gNB will include the TA value command for the UE, which the UE will use to adjust its future uplink transmissions.

For both 4-step and 2-step initial access procedures therefore, as described above, the downlink response contains a $T_A$ value which is in a range of 0, 1, 2, 3,..., 3846. Then, upon receipt of this value, the UE converts it into an absolute time value in seconds as follows:

$$T_{\mathrm{TA}} = T_A \cdot 16 \cdot 64 \cdot T_c / 2^{\mu}$$

where $\mu$ is the subcarrier spacing index as shown in Table I below, and $T_c$ is the basic timing unit as defined in [10].

*Table I: The subcarrier spacing index $\mu$.*

| $\mu$ | $\Delta f = 2^{\mu} \cdot 15$ [kHz] |
|---|---|
| 0 | 15 |
| 1 | 30 |

(continued)

| $\mu$ | $\Delta f = 2^{\mu} \cdot 15$ [kHz] |
|---|---|
| 2 | 60 |
| 3 | 120 |
| 4 | 240 |

After a UE has established a connection with a cell, the timing advance is maintained as the propagation delay changes due to UE mobility within the same cell. The gNB regularly measures the propagation delays from the UE, for example based on received UL SRS, PUSCH and PUCCH, and then the gNB includes TA updates in the downlink PDSCH transmissions (known as Timing Advance MAC Control Element) for the UE. The gNB may also command a UE (known as PDCCH order) to transmit a preamble for the purpose of UL synchronisation assuming that a UE is in RRC connected mode but not UL synchronised. In response, the gNB sends an update of TA value based on UL preamble measurements. In the end, the UE adjusts its future uplink transmissions based on the new TA value.

If UE is moving to another cell (i.e. target cell) while is still RRC connected, based on a handover procedure such as that described above with respect to Figure 9, the UE will be instructed to transmit a preamble to the target cell (see step "9. Synchronisation" of Figure 9) so that the target cell is able to estimate the propagation delay. After the target cell has received the preamble and has determined the TA value, the target cell sends the TA value command, and then the UE adjusts its future uplink transmissions based on the TA value of the new cell.

For maintaining the timing advance when a RRC connected mode, the UE receives a *relative* $T_A$ value, which may have one of 64 values in a range of 0, 1, 2, 3,..., 63. Then the UE converts the *relative* $T_A$ in to an absolute time value in seconds as follows:

$$T_{\text{TA\_new}} = T_{\text{TA\_old}} + (T_A - 31) \cdot 16 \cdot 64 \cdot T_c / 2^{\mu}$$

During handover, the UE transmits PRACH and the gNB sends a response to this PRACH in the downlink, in accordance with either a 4-step or a 2-step RACH procedure as described above, for the sake of UL synchronisation as described above. The use of such a RACH procedure simply for the purpose of achieving synchronisation during handover however creates delay for a UE in transmitting actual data to the new cell and/or wastes some resources within the target cell. Embodiments of the present disclosure seek to provide solutions to such a problem.

**RACH-less Handover Regardless of Propagation Delay**

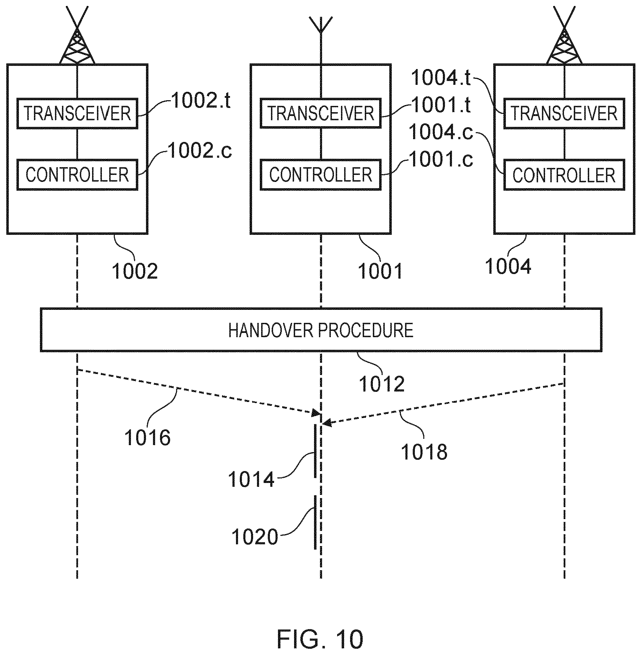

Figure 10 provides a part schematic representation, part message flow diagram of communications between a communications device or UE 1001 and a wireless communications network in accordance with embodiments of the present technique. The wireless communications network may include a plurality of infrastructure equipment 1002, 1004 which each provide a cell having a coverage area within in one of which the communications device 1001 may be located, and which the communications device 1001 may move between. The communications device 1001 comprises a transceiver (or transceiver circuitry) 1001.t configured to transmit signals to or receive signals from the wireless communications network (for example, to at least one of the infrastructure equipment 1002 via a wireless access interface provided by the wireless communications network), and a controller (or controller circuitry) 1001.c configured to control the transceiver circuitry 1001.t to transmit or to receive the signals. As can be seen in Figure 10, the infrastructure equipment 1002, 1004 may also comprises a transceiver (or transceiver circuitry) 1002.t, 1004.t which may configured to transmit signals to or receive signals from the communications device 1001 via the wireless access interface, and a controller (or controller circuitry) 1002.c, 1004c, which may be configured to control the transceiver circuitry 1002.t, 1004.t to transmit or to receive the signals. Each of the controllers 1001.c, 1002.c may be, for example, a microprocessor, a CPU, or a dedicated chipset, etc.

The controller circuitry 1001.c of the communications device 1001 is configured in combination with the transceiver circuitry 1001.t of the communications device 1001 to determine that the communications device 1001 is to perform a handover procedure 1012 from a first cell of the wireless communications network (which in the example of Figure 10 is controlled by infrastructure equipment 1002) to a second cell of the wireless communications network (which in the example of Figure 10 is controlled by infrastructure equipment 1004), to measure 1014 a difference between the start of a first radio frame 1016 received from the first cell and the start of a second radio frame 1018 received from the second cell, and to determine 1120, during the handover procedure 1012, in accordance with the measured difference 1014, at least one of a value of a propagation delay of the second cell and a timing advance of the second cell, the propagation delay of the second cell defining a time taken for a signal to travel one way between the communications device 1001 and the second cell, the timing advance of the second cell being defining a time taken for a signal to travel a round trip between the communications device 1001 and the second cell.

Essentially, embodiments of the present technique propose that a UE or serving cell is to apply the difference of downlink radio frames received from the serving cell and the target cell as well as a current timing advance value (i.e. derived from two-way propagation delay values) of the serving cell in order to estimate the UL propagation delay (or timing advance) of the target cell. Hence, through application of embodiments of the present technique, there is no need for any PRACH transmission in the uplink or DL transmission responses for the purpose of UL synchronisation. That is, embodiments of the present technique enable a RACH-less handover. In known systems and techniques, RACH-less handover can only be used for small cells where propagation delay is insignificant, and it is known that the UE is essentially in sync with both the target and serving cells. However, embodiments of the present technique may enable a RACH-less handover even in scenarios when propagation delay is significant.

As described above, embodiments of the present technique can provide methods for either the UE or the serving gNB to determine the UL propagation delay or the timing advance of the target cell.

In arrangements of embodiments of the present technique, where the UE determines itself the UL propagation delay or the timing advance of the target cell, the UE first measures the frame timing difference between the NR serving cell and the NR target cell. This is specified in [11], Section 5.1.14, as follows:

$$\text{Frame boundary offset} = [(T_{FrameBoundaryPCell} - T_{FrameBoundaryTRGCell})/5],$$

where $T_{FrameBoundaryPCell}$ is **the** time when the UE receives the start of a radio frame from the PCell, and $T_{FrameBoundaryTRGCell}$ is the time when the UE receives the start of the radio frame from the target cell that is closest in time to the radio frame received from the PCell. The unit of ($T_{FrameBoundaryPCell}$ - $T_{FrameBoundaryTRGCell}$) is $T_S$.

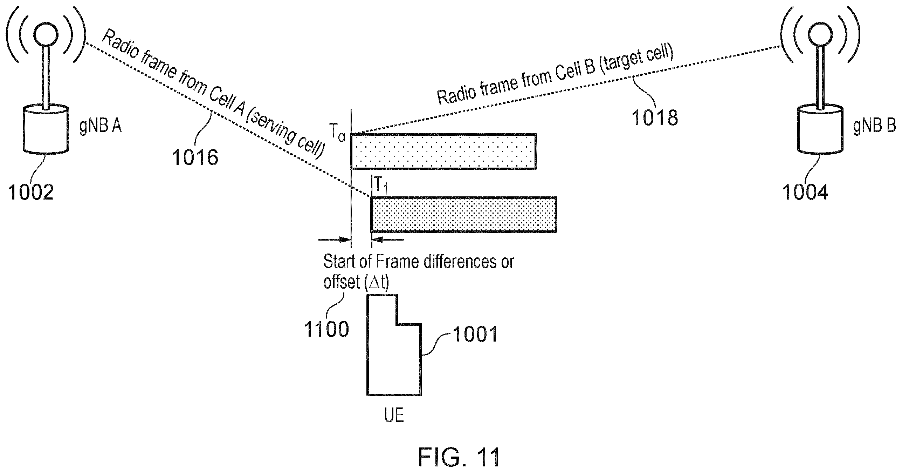

The above text reproduced from [11] is illustrated in Figure 11, which shows a UE 1001 which is undergoing handover between a serving cell gNB A 1002 and a target cell gNB B 1004. Again, like in the example of Figure 10, the UE 1001 here measures the timing difference between the start of a radio frame 1016 received from gNB A 1002 (denoted as $T_0$) and the start of a radio frame 1018 received from gNB B 1004 (denoted as $T_1$), and this is denoted as $\Delta t$, which is expressed in seconds, and may be calculated in the following manner:

$$\Delta t = (T_1 - T_0) \cdot 64 \cdot T_c$$

where $T_c$ is derived from $T_s/T_c = 64$ as in [10]. $\Delta t$ can be a positive or negative value. It should be noted that in accordance with embodiments of the present technique, the scaling factor 5 in the above text reproduced from [10] is not taken into account. In addition, the UE may be required to read the MIB (master information block) of the target cell during the measurement of the frame timing difference in order to determine, for example, the radio frame boundary of the target cell.

After the UE has found the difference of the frame timing between the NR serving cell, the UE can then calculate the absolute timing advance value or propagation delay value of the target cell as is described below. This may be aided through reception, by the UE from the serving cell, of a TA value of the first cell. In other words, the communications device may be configured to receive an indication of a value of a timing advance of the first cell, the timing advance of the first cell defining a time taken for a signal to travel a round trip between the communications device and the first cell.

If the frame timing between neighboring cells are synchronised at the point of transmissions (i.e. at the gNBs), then in some arrangements of embodiments of the present technique the UE can calculate the absolute timing advance value ($T_{TA\_target\ cell}$) or the one-way propagation delay ($T_{PD\_target\ cell}$) for the target cell as follows:

$$T_{TA\_target\ cell} = T_{TA\_serving\ cell} - (2 * \Delta t),$$

or

$$T_{PD\_target\ cell} = (T_{TA\_serving\ cell}/2) - \Delta t$$

In other words, the communications device is configured to determine the value of the propagation delay of the second cell by subtracting the measured difference from a value equal to half of the value of the timing advance of the first cell, and/or to determine the value of the timing advance of the second cell by subtracting a value equal to double the measured difference from the value of the timing advance of the first cell.

If the frame timing between neighboring cells are <u>not</u> synchronised at the point of transmissions (i.e. at the gNBs), then the earlier UE measurement of $\Delta t$ already includes a fixed value of misalignment between the two cells. If the serving gNB already knows the misalignment value ($\Delta k$) between itself and the target cell, then the serving gNB can send the

misalignment value ($\Delta k$) to the UE. Based on this, in some arrangements of embodiments of the present technique, the UE can then calculate the absolute timing advance value or the one-way propagation delay for the target cell as follows:

$$T_{\text{TA\_target cell}} = T_{\text{TA\_serving cell}} - [2 * (\Delta t - \Delta k)],$$

or

$$T_{\text{PD\_target cell}} = (T_{\text{TA\_serving cell}}/2) - (\Delta t - \Delta k)$$

In other words, the communications device is configured to receive an indication of a misalignment value from the first cell, the misalignment value defining an amount of time by which the first cell is out of synchronisation with the second cell, and to determine the value of the propagation delay of the second cell by subtracting the misalignment value from the measured difference and subsequently by subtracting a result of the subtraction of the misalignment value from the measured difference from a value equal to half of the value of the timing advance of the first cell, and/or to determine the value of the timing advance of the second cell by subtracting the misalignment value from the measured difference and subsequently by subtracting a value equal to double a result of the subtraction of the misalignment value from the measured difference from the value of the timing advance of the first cell.

In arrangements of embodiments of the present technique, where the serving gNB determines the UL propagation delay or the timing advance of the target cell, the UE again first measures the frame timing difference between the NR serving cell and the NR target cell. However, rather than then calculating the UL propagation delay itself, the UE transmits a measurement report ($\Delta t$) to the serving cell to do the calculations of the UL timing advance (or one-way propagation delay) as follows:

$$T_{\text{TA\_target cell}} = T_{\text{TA\_serving cell}} - (2 * \Delta t),$$

or

$$T_{\text{PD\_target cell}} = (T_{\text{TA\_serving cell}}/2) - \Delta t$$

Following the performance of the above calculation, the serving cell can then send the UL timing advance value of the target cell during handover to the UE.

In other words, the communications device is configured to transmit an indication of the measured difference to the first cell, and to determine the at least one of the value of the propagation delay of the second cell and the value of the timing advance by receiving, from the first cell in one or more messages of the handover procedure, in response to the transmitted indication of the measured difference, the at least one of the value of the propagation delay of the second cell and the value of the timing advance of the second cell. Here, the infrastructure equipment (i.e. that controls the first cell) is configured to determine that the communications device is to perform a handover procedure from the first cell to a second cell of the wireless communications network, to receive, from the communications device, an indication of a measured difference between the start of a first radio frame received by the communications device from the first cell and the start of a second radio frame received by the communications device from the second cell, to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell defining a time taken for a signal to travel a round trip between the communications device and the second cell, and to transmit, in one or more messages of the handover procedure, an indication of the at least one of the value of the propagation delay of the second cell and the value of the timing advance of the second cell to the communications device.

Similarly to the arrangements of embodiments of the present technique described above where the UE determines the UL propagation delay of the target cell, when it is the serving gNB that performs the calculation and makes this determination, the serving gNB may do so the on basis of the received measured difference from the UE alone, or additionally on the basis of a misalignment value between the serving cell and the target cell. In other words, the infrastructure equipment (i.e. that controls the first cell) is configured to determine a value of a timing advance of the first cell, the timing advance of the first cell defining a time taken for a signal to travel a round trip between the communications device and the first cell, and to determine the value of the propagation delay of the second cell by subtracting the measured difference from a value equal to half of the value of the timing advance of the first cell, and/or to determine the value of the timing advance of the second cell by subtracting a value equal to double the measured difference from the value of the timing advance of the second cell. The infrastructure equipment may then be configured to determine a misalignment value between the first cell and the second cell, the misalignment value defining an amount of time by which the first cell is out of synchronisation with the second cell, and to determine the value of the propagation delay of the second cell by subtracting the misalignment value from the measured difference and subsequently by subtracting a result of the subtraction of the misalignment value from the measured difference from a value equal to half of the value of the timing advance of the first cell, and/or to determine the value of the timing advance of the second cell by subtracting the misalignment value from the measured difference and subsequently by subtracting a value equal to double a result of the subtraction of the misalignment value from the measured difference from the value of the timing advance of the first cell.

One issue with such above arrangements of embodiments of the present technique where the serving cell determines the TA of the target cell is that the TA may be outdated by the time the UE is going to apply for the UL transmission. In order to mitigate this, or otherwise if the UE performs the determination of the target cell's TA, in some arrangements of embodiments of the present technique, assuming that TA value used by the UE may not be so accurate (i.e. a is a rough estimate or is outdated), the target gNB sends an update of the TA in DL transmission to the UE after the target gNB receives a handover complete message (in PUSCH). In other words, the infrastructure equipment is configured to receive, from the second cell after the handover procedure has been completed, an updated value of the at least one of the value of the propagation delay of the second cell and the value of the timing advance of the second cell.

In another arrangement of embodiments of the present technique, a UE may report the timing advance value that it used for this transmission (for example within the " handover complete message") to the target cell, so that the target cell is able to record and store the value, and provide an updated value to the UE if the UE's value is incorrect, or different to the actual value by more than a threshold amount. In other words, the communications device is configured to transmit, to the second cell, an indication of the at least one of the value of the propagation delay of the second cell and the value of the timing advance of the second cell.

In other arrangements of embodiments of the present technique, a UE may be configured to transmit UL Reference Signals (RS) to the target cell in advance of a handover being completed using pre-allocated resources, and the target cell may then inform the serving cell of the propagation delay (or TA) of the UE. Then, the serving cell is able to include the TA in the handover messages so that the UE can apply the TA for the UL transmissions to the target cell. In other words, the communications device is configured to determine that the communications device is to perform a handover procedure from the first cell to a second cell of the wireless communications network, to transmit, in communications resources pre-allocated to the communications device and in which the communications device may transmit signals (for example, the UE may optionally transmit uplink data in these pre-configured uplink resources, or the UE may be allocated the pre-configured uplink resources - by the source cell based on an RS signalling configuration between the source cell and target cell - in which to transmit RS), uplink reference signals to the second cell, and to receive, from the first cell in one or more messages of the handover procedure, in response to the transmitted uplink reference signals, at least one of a value of a propagation delay of the second cell and a value of a timing advance of the second cell, the propagation delay of the second cell defining a time taken for a signal to travel one way between the communications device and the second cell, the timing advance of the second cell defining a time taken for a signal to travel a round trip between the communications device and the second cell.

In accordance with the above described arrangements of embodiments of the present technique therefore, a UE or source gNB may determine, during handover of the UE from the source gNB to target gNB, a timing advance or a propagation delay of the target gNB. Here, the propagation delay is defined as the time a signal travels from the UE to the gNB and the timing advance is defined as a round-trip time for a signal between the UE and gNB. However, those skilled in the art would appreciate that any other definition of "propagation delay" or "timing advance", or any other kind of timing information that is consistent between the target and source gNBs, is within the scope of the present disclosure and is consistent with the inventive contribution of embodiments of the present technique, so long as the calculation (i.e. the subtraction of a measured difference and/or misalignment value as described above) is carried out with respect to the timing values of the source and target gNBs in the same manner as is described herein.

**Flow Diagram Representation**

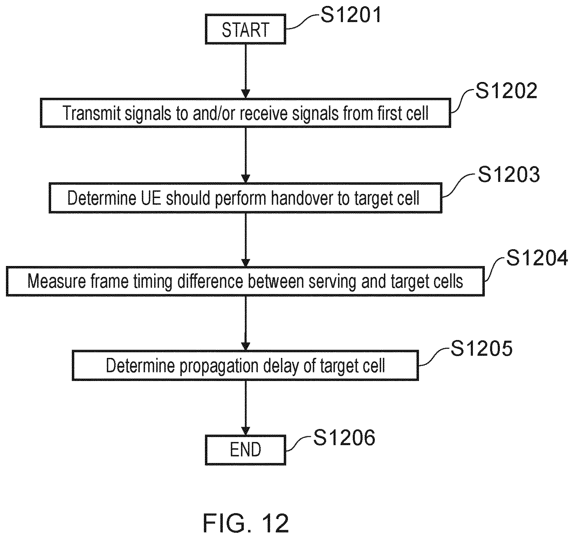

Figure 12 shows a flow diagram illustrating a method of operating a communications device in a wireless communications network. The method begins in step S1201. The method comprises, in step S1202, transmitting signals to and/or receiving signals from a first cell of a wireless communications network. In step S1203, the process comprises determining that the communications device is to perform a handover procedure from a first cell to a second cell of the wireless communications network, and subsequently in step S1204, comprises measuring a difference between the start of a first radio frame received from the first cell and the start of a second radio frame received from the second cell. In step S1205, the method comprises determining, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell defining a time taken for a signal to travel a round trip between the communications device and the second cell. The process ends in step S1206.

Those skilled in the art would appreciate that the example method shown by Figure 12 and example system shown in Figure 10 may be adapted in accordance with embodiments of the present technique. For example, other intermediate steps may be included in such methods or systems, or the steps may be performed in any logical order. Though the example method of Figure 12 shows the UE determining, in step S1205, the uplink propagation delay of the second cell, the skilled person would appreciate that the UE could also or alternatively determine the timing advance of the second cell, where this timing advance is, as described above, essentially double the uplink propagation delay.

Those skilled in the art would further appreciate that such infrastructure equipment and/or communications devices as herein defined may be further defined in accordance with the various arrangements and embodiments discussed in the preceding paragraphs. It would be further appreciated by those skilled in the art that such infrastructure equipment and communications devices as herein defined and described may form part of communications systems other than those defined by the present disclosure.

The following numbered paragraphs provide further example aspects and features of the present technique:

Paragraph 1. A communications device comprising

transceiver circuitry configured to transmit signals to and/or to receive signals from a first cell of a wireless communications network, and
controller circuitry configured in combination with the transceiver circuitry
to determine that the communications device is to perform a handover procedure from the first cell to a second cell of the wireless communications network,
to measure a difference between the start of a first radio frame received from the first cell and the start of a second radio frame received from the second cell, and
to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell. Paragraph 2. A communications device according to Paragraph 1, wherein the controller circuitry is configured in combination with the transceiver circuitry
to receive an indication of a value of a timing advance of the first cell, the timing advance of the first cell defining a time taken for a signal to travel a round trip between the communications device and the first cell.

Paragraph 3. A communications device according to Paragraph 2, wherein the controller circuitry is configured in combination with the transceiver circuitry
to determine the value of the propagation delay of the second cell by subtracting the measured difference from a value equal to half of the value of the timing advance of the first cell, and/or to determine the value of the timing advance of the second cell by subtracting a value equal to double the measured difference from the value of the timing advance of the first cell.

Paragraph 4. A communications device according to Paragraph 2 or Paragraph 3, wherein the controller circuitry is configured in combination with the transceiver circuitry

to receive an indication of a misalignment value from the first cell, the misalignment value defining an amount of time by which the first cell is out of synchronisation with the second cell, and
to determine the value of the propagation delay of the second cell by subtracting the misalignment value from the measured difference and subsequently by subtracting a result of the subtraction of the misalignment value from the measured difference from a value equal to half of the value of the timing advance of the first cell, and/or to determine the value of the timing advance of the second cell by subtracting the misalignment value from the measured difference and subsequently by subtracting a value equal to double a result of the subtraction of the misalignment value from the measured difference from the value of the timing advance of the first cell.

Paragraph 5. A communications device according to any of Paragraphs 1 to 4, wherein the controller circuitry is configured in combination with the transceiver circuitry

to transmit an indication of the measured difference to the first cell, and
to determine the at least one of the value of the propagation delay of the second cell and the value of the timing advance of the second cell by receiving, from the first cell in one or more messages of the handover procedure, in response to the transmitted indication of the measured difference, the at least one of the value of the propagation delay of the second cell and the value of the timing advance of the second cell.

Paragraph 6. A communications device according to any of Paragraphs 1 to 5, wherein the controller circuitry is configured in combination with the transceiver circuitry

to receive, from the second cell after the handover procedure has been completed, an updated value of the at least one of the value of the propagation delay of the second cell and the value of the timing advance of the second cell.

Paragraph 7. A communications device according to any of Paragraphs 1 to 6, wherein the controller circuitry is configured in combination with the transceiver circuitry

to transmit, to the second cell, an indication of the at least one of the value of the propagation delay of the second cell and the value of the timing advance of the second cell.

Paragraph 8. A method of operating a communications device, the method comprising

transmitting signals to and/or receiving signals from a first cell of a wireless communications network,

determining that the communications device is to perform a handover procedure from a first cell to a second cell of the wireless communications network,

measuring a difference between the start of a first radio frame received from the first cell and the start of a second radio frame received from the second cell, and

determining, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell. Paragraph 9. Circuitry for a communications device, the circuitry comprising

transceiver circuitry configured to transmit signals to and/or to receive signals from a first cell of a wireless communications network, and

controller circuitry configured in combination with the transceiver circuitry

to determine that the circuitry is to perform a handover procedure from the first cell to a second cell of the wireless communications network,

to measure a difference between the start of a first radio frame received from the first cell and the start of a second radio frame received from the second cell, and

to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell. Paragraph 10. An infrastructure equipment controlling a first cell of a wireless communications network, the infrastructure equipment comprising

transceiver circuitry configured to transmit signals to and/or to receive signals from a communications device, and

controller circuitry configured in combination with the transceiver circuitry

to determine that the communications device is to perform a handover procedure from the first cell to a second cell of the wireless communications network,

to receive, from the communications device, an indication of a measured difference between the start of a first radio frame received by the communications device from the first cell and the start of a second radio frame received by the communications device from the second cell,

to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell, and to transmit, in one or more messages of the handover procedure, an indication of the at least one of the value of the propagation delay of the second cell and the value of the timing advance of the second cell to the communications device.

Paragraph 11. An infrastructure equipment according to Paragraph 10, wherein the controller circuitry is configured in combination with the transceiver circuitry

to determine a value of a timing advance of the first cell, the timing advance of the first cell defining a time taken for a signal to travel a round trip between the communications device and the first cell, and

to determine the value of the propagation delay of the second cell by subtracting the measured difference from a value equal to half of the value of the timing advance of the first cell, and/or to determine the value of the timing advance of the second cell by subtracting a value equal to double the measured difference from the value of the timing advance of the second cell.

Paragraph 12. An infrastructure equipment according to Paragraph 10 or Paragraph 11, wherein the controller circuitry is configured in combination with the transceiver circuitry

to determine a value of a timing advance of the first cell, the timing advance of the first cell defining a time taken for a signal to travel a round trip between the communications device and the first cell,
to determine a misalignment value between the first cell and the second cell, the misalignment value defining an amount of time by which the first cell is out of synchronisation with the second cell, and
to determine the value of the propagation delay of the second cell by subtracting the misalignment value from the measured difference and subsequently by subtracting a result of the subtraction of the misalignment value from the measured difference from a value equal to half of the value of the timing advance of the first cell, and/or to determine the value of the timing advance of the second cell by subtracting the misalignment value from the measured difference and subsequently by subtracting a value equal to double a result of the subtraction of the misalignment value from the measured difference from the value of the timing advance of the first cell.

Paragraph 13. A method of operating an infrastructure equipment controlling a first cell of a wireless communications network, the method comprising

transmitting signals to and/or receiving signals from a communications device,
determining that the communications device is to perform a handover procedure from the first cell to a second cell of the wireless communications network,
receiving, from the communications device, an indication of a measured difference between the start of a first radio frame received by the communications device from the first cell and the start of a second radio frame received by the communications device from the second cell,
determining, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell, and
transmitting, in one or more messages of the handover procedure, an indication of the at least one of the value of the propagation delay of the second cell and the value of the timing advance of the second cell to the communications device.

Paragraph 14. Circuitry for an infrastructure equipment controlling a first cell of a wireless communications network, the circuitry comprising

transceiver circuitry configured to transmit signals to and/or to receive signals from a communications device, and
controller circuitry configured in combination with the transceiver circuitry
to determine that the communications device is to perform a handover procedure from the first cell to a second cell of the wireless communications network,
to receive, from the communications device, an indication of a measured difference between the start of a first radio frame received by the communications device from the first cell and the start of a second radio frame received by the communications device from the second cell,
to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell, and
to transmit, in one or more messages of the handover procedure, an indication of the at least one of the value of the propagation delay of the second cell and the value of the timing advance of the second cell to the communications device.

Paragraph 15. A communications device comprising

transceiver circuitry configured to transmit signals to and to receive signals from a first cell of a wireless communications network, and
controller circuitry configured in combination with the transceiver circuitry
to determine that the communications device is to perform a handover procedure from the first cell to a second cell of the wireless communications network,

to transmit, in communications resources pre-allocated to the communications device and in which the communications device may transmit signals, uplink reference signals to the second cell, and

to receive, from the first cell in one or more messages of the handover procedure, in response to the transmitted uplink reference signals, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell.

Paragraph 16. A method of operating a communications device, the method comprising

transmitting signals to and receiving signals from a first cell of a wireless communications network,

determining that the circuitry is to perform a handover procedure from the first cell to a second cell of the wireless communications network,

transmitting, in communications resources pre-allocated to the communications device and in which the communications device may transmit signals, uplink reference signals to the second cell, and

receiving, from the first cell in one or more messages of the handover procedure, in response to the transmitted uplink reference signals, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell.

Paragraph 17. Circuitry for a communications device, the circuitry comprising

transceiver circuitry configured to transmit signals to and to receive signals from a first cell of a wireless communications network, and

controller circuitry configured in combination with the transceiver circuitry

to determine that the circuitry is to perform a handover procedure from the first cell to a second cell of the wireless communications network,

to transmit, in communications resources pre-allocated to the communications device and in which the circuitry may transmit signals, uplink reference signals to the second cell, and

to receive, from the first cell in one or more messages of the handover procedure, in response to the transmitted uplink reference signals, at least one of a value of a propagation delay of the second cell and a value of a timing advance of the second cell, the propagation delay of the second cell defining a time taken for a signal to travel one way between the circuitry and the second cell, the timing advance of the second cell being defining a time taken for a signal to travel a round trip between the communications device and the second cell.

Paragraph 18. An infrastructure equipment controlling a first cell of a wireless communications network, the infrastructure equipment comprising

transceiver circuitry configured to transmit signals to and/or to receive signals from a communications device, and controller circuitry configured in combination with the transceiver circuitry

to determine that the communications device is to perform a handover procedure from the first cell to a second cell of the wireless communications network,

to receive, from the second cell, at least one of a value of a propagation delay of the second cell and a value of a timing advance of the second cell, the propagation delay of the second cell defining a time taken for a signal to travel one way between the circuitry and the second cell and being calculated by the second cell using uplink reference signals transmitted by the communications device to the second cell, the timing advance of the second cell being defining a time taken for a signal to travel a round trip between the communications device and the second cell and being calculated by the second cell using the uplink reference signals, and

to transmit, to the communications device in one or more messages of the handover procedure, the at least one of the value of the propagation delay of the second cell and the value of the timing advance of the second cell.

Paragraph 19. A method of operating an infrastructure equipment controlling a first cell of a wireless communications network, the method comprising

transmitting signals to and/or receiving signals from a communications device,

determining that the communications device is to perform a handover procedure from the first cell to a second cell of the wireless communications network,

receiving, from the second cell, at least one of a value of a propagation delay of the second cell and a value of a timing advance of the second cell, the propagation delay of the second cell defining a time taken for a signal to travel one way between the circuitry and the second cell and being calculated by the second cell using uplink reference signals transmitted by the communications device to the second cell, the timing advance of the second cell being defining a time taken for a signal to travel a round trip between the communications device and the second cell and being calculated by the second cell using the uplink reference signals, and

transmitting, to the communications device in one or more messages of the handover procedure, the at least one of the value of the propagation delay of the second cell and the value of the timing advance of the second cell.

Paragraph 20. Circuitry for an infrastructure equipment controlling a first cell of a wireless communications network, the circuitry comprising

transceiver circuitry configured to transmit signals to and/or to receive signals from a communications device, and controller circuitry configured in combination with the transceiver circuitry

to determine that the communications device is to perform a handover procedure from the first cell to a second cell of the wireless communications network,

to receive, from the second cell, at least one of a value of a propagation delay of the second cell and a value of a timing advance of the second cell, the propagation delay of the second cell defining a time taken for a signal to travel one way between the circuitry and the second cell and being calculated by the second cell using uplink reference signals transmitted by the communications device to the second cell, the timing advance of the second cell being defining a time taken for a signal to travel a round trip between the communications device and the second cell and being calculated by the second cell using the uplink reference signals, and

to transmit, to the communications device in one or more messages of the handover procedure, the at least one of the value of the propagation delay of the second cell and the value of the timing advance of the second cell.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognise that various features of the described embodiments may be combined in any manner suitable to implement the technique.

References

[1] Holma H. and Toskala A, "LTE for UMTS OFDMA and SC-FDMA based radio access", John Wiley and Sons, 2009.
[2] RP-192330, "New work item: 2-step RACH for NR," ZTE Corporation, 3GPP TSG RAN Meeting #85.
[3] RP-192324, "Revised WID: Support of NR Industrial Internet of Things (IoT)," Nokia, Nokia Shanghai Bell, 3GPP TSG RAN Meeting #85.
[4] RP-191575, "NR-based Access to Unlicensed Spectrum," Qualcomm, Inc., 3GPP TSG RAN Meeting #84.
[5] RP-193252, "New Work Item on NR small data transmission in INACTIVE state," ZTE Corporation, 3GPP TSG RAN Meeting #86.
[6] ETSI TS 136 213 V13.0.0 (2016-01) / 3GPP TS 36.212 version 13.0.0 Release 13.
[7] R2-168544, "UL data transmission in RRC_INACTIVE," Huawei, HiSilicon, RAN#96.
[8] R2-168713, "Baseline solution for small data transmission in RRC_INACTIVE," Ericsson, Ran#96.

[9] TR 38.889, V16.0.0, "3rd Generation Partnership Project; Technical Specification Group Radio Access Network; Study on NR-based Access to Unlicensed Spectrum; (Release 16)," 3GPP, December 2018.
[10] TS 38.211, V16.1.0, "3rd Generation Partnership Project; Technical Specification Group Radio Access Network; NR; Physical channels and modulation; (Release 16)," 3GPP, March 2020.
[11] TS 38.215, V16.1.0, "3rd Generation Partnership Project; Technical Specification Group Radio Access Network; NR; Physical layer measurements; (Release 16)," 3GPP, March 2020.

**Claims**

1. A communications device comprising

   transceiver circuitry configured to transmit signals to and/or to receive signals from a first cell of a wireless communications network, and
   controller circuitry configured in combination with the transceiver circuitry
   to determine that the communications device is to perform a handover procedure from the first cell to a second cell of the wireless communications network,
   to measure a difference between the start of a first radio frame received from the first cell and the start of a second radio frame received from the second cell, and
   to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell.

2. A communications device according to Claim 1, wherein the controller circuitry is configured in combination with the transceiver circuitry
   to receive, from the second cell after the handover procedure has been completed, an updated value of the at least one of the value of the propagation delay of the second cell and the value of the timing advance of the second cell.

3. A communications device according to Claim 1, wherein the controller circuitry is configured in combination with the transceiver circuitry
   to transmit, to the second cell, an indication of the at least one of the value of the propagation delay of the second cell and the value of the timing advance of the second cell.

4. Circuitry for a communications device, the circuitry comprising

   transceiver circuitry configured to transmit signals to and/or to receive signals from a first cell of a wireless communications network, and
   controller circuitry configured in combination with the transceiver circuitry
   to determine that the circuitry is to perform a handover procedure from the first cell to a second cell of the wireless communications network,
   to measure a difference between the start of a first radio frame received from the first cell and the start of a second radio frame received from the second cell, and
   to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell.

5. An infrastructure equipment controlling a first cell of a wireless communications network, the infrastructure equipment comprising

   transceiver circuitry configured to transmit signals to and/or to receive signals from a communications device, and
   controller circuitry configured in combination with the transceiver circuitry
   to determine that the communications device is to perform a handover procedure from the first cell to a second cell of the wireless communications network,
   to receive, from the communications device, an indication of a measured difference between the start of a first radio frame received by the communications device from the first cell and the start of a second radio frame received by the communications device from the second cell,

to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell, and

to transmit, in one or more messages of the handover procedure, an indication of the at least one of the value of the propagation delay of the second cell and the value of the timing advance of the second cell to the communications device.

6. An infrastructure equipment according to Claim 5, wherein the controller circuitry is configured in combination with the transceiver circuitry

to determine a value of a timing advance of the first cell, the timing advance of the first cell defining a time taken for a signal to travel a round trip between the communications device and the first cell, and

to determine the value of the propagation delay of the second cell by subtracting the measured difference from a value equal to half of the value of the timing advance of the first cell, and/or to determine the value of the timing advance of the second cell by subtracting a value equal to double the measured difference from the value of the timing advance of the second cell.

7. An infrastructure equipment according to Claim 5, wherein the controller circuitry is configured in combination with the transceiver circuitry

to determine a value of a timing advance of the first cell, the timing advance of the first cell defining a time taken for a signal to travel a round trip between the communications device and the first cell,

to determine a misalignment value between the first cell and the second cell, the misalignment value defining an amount of time by which the first cell is out of synchronisation with the second cell, and

to determine the value of the propagation delay of the second cell by subtracting the misalignment value from the measured difference and subsequently by subtracting a result of the subtraction of the misalignment value from the measured difference from a value equal to half of the value of the timing advance of the first cell, and/or to determine the value of the timing advance of the second cell by subtracting the misalignment value from the measured difference and subsequently by subtracting a value equal to double a result of the subtraction of the misalignment value from the measured difference from the value of the timing advance of the first cell.

8. Circuitry for an infrastructure equipment controlling a first cell of a wireless communications network, the circuitry comprising

transceiver circuitry configured to transmit signals to and/or to receive signals from a communications device, and controller circuitry configured in combination with the transceiver circuitry

to determine that the communications device is to perform a handover procedure from the first cell to a second cell of the wireless communications network,

to receive, from the communications device, an indication of a measured difference between the start of a first radio frame received by the communications device from the first cell and the start of a second radio frame received by the communications device from the second cell,

to determine, during the handover procedure, in accordance with the measured difference, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell, and

to transmit, in one or more messages of the handover procedure, an indication of the at least one of the value of the propagation delay of the second cell and the value of the timing advance of the second cell to the communications device.

9. A communications device comprising

transceiver circuitry configured to transmit signals to and to receive signals from a first cell of a wireless communications network, and

controller circuitry configured in combination with the transceiver circuitry

to determine that the communications device is to perform a handover procedure from the first cell to a second cell of the wireless communications network,

to transmit, in communications resources pre-allocated to the communications device and in which the communications device may transmit signals, uplink reference signals to the second cell, and

to receive, from the first cell in one or more messages of the handover procedure, in response to the transmitted uplink reference signals, at least one of a value of a propagation delay of the second cell and a value of a timing advance of the second cell, the propagation delay of the second cell defining a time taken for a signal to travel one way between the communications device and the second cell, the timing advance of the second cell being defining a time taken for a signal to travel a round trip between the communications device and the second cell.

10. Circuitry for a communications device, the circuitry comprising

transceiver circuitry configured to transmit signals to and to receive signals from a first cell of a wireless communications network, and

controller circuitry configured in combination with the transceiver circuitry

to determine that the circuitry is to perform a handover procedure from the first cell to a second cell of the wireless communications network,

to transmit, in communications resources pre-allocated to the communications device and in which the circuitry may transmit signals, uplink reference signals to the second cell, and

to receive, from the first cell in one or more messages of the handover procedure, in response to the transmitted uplink reference signals, at least one of a value of a propagation delay of the second cell and a value of a timing advance of the second cell, the propagation delay of the second cell defining a time taken for a signal to travel one way between the circuitry and the second cell, the timing advance of the second cell being defining a time taken for a signal to travel a round trip between the communications device and the second cell.

11. An infrastructure equipment controlling a first cell of a wireless communications network, the infrastructure equipment comprising

transceiver circuitry configured to transmit signals to and/or to receive signals from a communications device, and controller circuitry configured in combination with the transceiver circuitry

to determine that the communications device is to perform a handover procedure from the first cell to a second cell of the wireless communications network,

to receive, from the second cell, at least one of a value of a propagation delay of the second cell and a value of a timing advance of the second cell, the propagation delay of the second cell defining a time taken for a signal to travel one way between the circuitry and the second cell and being calculated by the second cell using uplink reference signals transmitted by the communications device to the second cell, the timing advance of the second cell being defining a time taken for a signal to travel a round trip between the communications device and the second cell and being calculated by the second cell using the uplink reference signals, and

to transmit, to the communications device in one or more messages of the handover procedure, the at least one of the value of the propagation delay of the second cell and the value of the timing advance of the second cell.

12. Circuitry for an infrastructure equipment controlling a first cell of a wireless communications network, the circuitry comprising

transceiver circuitry configured to transmit signals to and/or to receive signals from a communications device, and controller circuitry configured in combination with the transceiver circuitry

to determine that the communications device is to perform a handover procedure from the first cell to a second cell of the wireless communications network,

to receive, from the second cell, at least one of a value of a propagation delay of the second cell and a value of a timing advance of the second cell, the propagation delay of the second cell defining a time taken for a signal to travel one way between the circuitry and the second cell and being calculated by the second cell using uplink reference signals transmitted by the communications device to the second cell, the timing advance of the second cell being defining a time taken for a signal to travel a round trip between the communications device and the second cell and being calculated by the second cell using the uplink reference signals, and

to transmit, to the communications device in one or more messages of the handover procedure, the at least one of the value of the propagation delay of the second cell and the value of the timing advance of the second cell.

FIG. 1

FIG. 2

FIG. 3

FIG. 4

101                                                    104

UE                                                    RAN

Grant free transmission

132

UE location is known
at cell/TRP level

134

DL notification
(Data, UE ID)

ACK

136

FIG. 5

101                                                    102

UE                                                    gNB

1. RA(Preamble)

1

2. RAR(TA, Grant for SRB0 & DRB)  140

142                                               2

3. RRC Connection resume request (SRB0)

3

Data-tx(DRB)                    144   } Multiplexed
                                        on same TTI
146

4. RRC Response (Ack & suspend)

148                                              4

FIG. 6

101

UE

102

eNB

150

RA preamble

RRC Connection resume request (SRB0)

Same TTI (MsgA)

Data-tx(DRB)

154

156

152

RA Response, TA

(MsgB) Same TTI

RRC Response (Ack & suspend)

158

FIG. 7

101

UE

102

eNB

MsgA: preamble + data

162

MsgB: RA response

164

FIG. 8

FIG. 9

TRANSCEIVER — 1002.t

CONTROLLER — 1002.c

1002

TRANSCEIVER

CONTROLLER

1001

1004.t
1001.t
1004.c
1001.c

TRANSCEIVER

CONTROLLER

1004

HANDOVER PROCEDURE

1012

1016

1018

1014

1020

FIG. 10

FIG. 11

FIG. 12

**REFERENCES CITED IN THE DESCRIPTION**

**Patent documents cited in the description**

- EP 20169971

**Non-patent literature cited in the description**

- **HOLMA H.** ; **TOSKALA A**. LTE for UMTS OFDMA and SC-FDMA based radio access. John Wiley and Sons, 2009
- **ZTE CORPORATION**. New work item: 2-step RACH for NR. *3GPP TSG RAN Meeting #85*
- **NOKIA** ; **NOKIA SHANGHAI BELL**. Revised WID: Support of NR Industrial Internet of Things (IoT). *3GPP TSG RAN Meeting #85*
- **QUALCOMM, INC**. NR-based Access to Unlicensed Spectrum. *3GPP TSG RAN Meeting #84*
- **ZTE CORPORATION**. New Work Item on NR small data transmission in INACTIVE state. *3GPP TSG RAN Meeting #86*
- ETSI TS 136 213 V13.0.0. *3GPP TS 36.212*, January 2016
- **HUAWEI**. UL data transmission in RRC_INACTIVE. *R2-168544*
- **ERICSSON**. Baseline solution for small data transmission in RRC_INACTIVE. *R2-168713*
- 3rd Generation Partnership Project; Technical Specification Group Radio Access Network; Study on NR-based Access to Unlicensed Spectrum; (Release 16). *TR 38.889, V16.0.0*, December 2018
- 3rd Generation Partnership Project; Technical Specification Group Radio Access Network; NR; Physical channels and modulation; (Release 16). *TS 38.211, V16.1.0*, March 2020
- 3rd Generation Partnership Project; Technical Specification Group Radio Access Network; NR; Physical layer measurements; (Release 16). *TS 38.215, V16.1.0*, March 2020